## Europäisches Patentamt

## European Patent Office

## Office européen des brevets

(19)

(11) Veröffentlichungsnummer: **0 091 976**
**B1**

(12) # EUROPÄISCHE PATENTSCHRIFT

(45) Veröffentlichungstag der Patentschrift:
18.03.87

(51) Int. Cl.⁴: **F 16 K 5/06**

(21) Anmeldenummer: 82103238.0

(22) Anmeldetag: 17.04.82

(54) Kugelhahn.

(43) Veröffentlichungstag der Anmeldung:
26.10.83 Patentblatt 83/43

(45) Bekanntmachung des Hinweises auf die Patenterteilung:
18.03.87 Patentblatt 87/12

(84) Benannte Vertragsstaaten:
AT BE CH DE FR GB IT LI LU NL SE

(56) Entgegenhaltungen:
DD-A-116 079
DE-C-1 086 504
US-A-3 148 695
US-A-3 591 129

(73) Patentinhaber: **Maschinenfabrik Werner Böhmer GmbH, D-4322 Sprockhövel 1 (DE)**

(72) Erfinder: **Böhmer, Günter, Eicklöhken 1, D-4322 Sprockhövel 1 (DE)**

(74) Vertreter: **Herrmann- Trentepohl, Werner, Dipl.- Ing., Schaeferstrasse 18, D-4690 Herne 1 (DE)**

LIBER, STOCKHOLM 1987

## Beschreibung

Die Erfindung betrifft einen Kugelhahn gemäß dem Oberbegriff des Anspruches 1; sie bezieht sich insbesondere auf das Absperren von strömenden Flüssigkeiten in Rohrleitungen, welche die in den Gehäuserohren sitzenden Dichtungen des Kugelhahns infolge ihrer Strömung belasten und dabei von ihren Sitzen abzuheben versuchen.

Die Erfindung geht aus von einem Kugelhahn gemäß der DD-A-11 60 79. Dort ist ein Ventil offenbart, welches es ermöglicht, z.B. eine mit einem solchen Ventil geschaltete Druckluftleitung im abgeschalteten Zustand zu entlasten. Hierzu ist zwischen den als Dichtungen dienenden Lagermanschetten eine Zusatzmanschette angeordnet, deren Mittelöffnung mit einem aus dem Gehäuse herausführenden Auslaß in Verbindung steht und wobei der kugelförmige Schließteil eine sich vom Durchgang etwa radial zum Kugelumfang hin erstreckende Aussparung aufweist, die in Schließstellung des Ventils in die Zusatzmanschette mündet und in Öffnungsstellung des Ventils der Schließstellung die Zusatzmanschette abdeckt. Die Aussparung im Schließteil ist so gestaltet, daß ihr in Öffnungsstellung des Schließteils eingangsseitiges Ende einen etwa U-förmigen Querschnitt hat, während sie an ihrem dem Ventilausgang zugewandten Ende in einem oberen und einem unteren Bereich gegenüber der Drehachse etwas tiefer in das Innere des Schließteils hineinreicht. Dadurch ergibt sich ein komplizierter Aufbau des Schließteils (Kükens), was eine aufwendige Herstellung voraussetzt. Trotz dieser komplizierten Form des Kükens ergeben sich bei Verschwenkung des Kükens keine proportionalen Drosselquerschnitte, so daß auch kein gerader Kennlinienverlauf eintritt. Ferner ist die Aussparung so groß bemessen, daß die bei geöffnetem Ventil dem Ventileingang zugewandte Kükenkante etwa mit dem inneren Rand der zum Ventileingang hin angeordneten Lagermanschette fluchtet. Das bringt den Nachteil mit sich, daß Segmente der Ringdichtungen bei Durchfluß und Drosselung zwangsläufig freigelegt werden und nicht von der Kugelfläche unterstützt werden. Dadurch kommen die Dichtungsflächen der Ringdichtungen mit dem strömenden Medium und darin enthaltenen Fremdkörpern in Berührung, was sich im Laufe der Zeit nachteilig auf die Dichtigkeit des Kugelhahns auswirkt.

Ein weiterer Kugelhahn ist aus der DE-C-10 86 504 bekannt. Bei diesem Kugelhahn findet ein Küken Verwendung, durch das es möglich sein soll, eine lineare Beziehung zwischen Drehung und Durchflußmenge zu erzielen. Hierzu ist das Küken so ausgestaltet, daß in dessen Umfangsfläche in ihrer Längsrichtung eine einen kontinuierlich sich ändernden Querschnitt aufweisende Ausnehmung zur Regelung der Durchflußmenge vorgesehen ist. Ein derartiges Küken weist eine komplizierte Geometrie auf, die einen schwierigen und aufwendigen Herstellungsprozeß voraussetzt.

Der Erfindung liegt daher die Aufgabe zugrunde, einen Kugelhahn der eingangs genannten Art so auszubilden, daß die Herstellung, insbesondere des Kugelkükens in einfacher Weise erfolgen kann, z.B. durch Räumen oder eine andere rationelle Bearbeitung und wobei trotz des einfachen Aufbaus die Drosselquerschnitte bei Verschwenkung des Kükens proportional sind, so daß ein gerader Kennlinienverlauf eintritt.

Erfindungsgemäß wird das durch die kennzeichnenden Merkmale des Anspruches 1 erreicht. Eine zweckmäßige Ausführungsform der Erfindung ist Gegenstand des Unteranspruches.

Durch die erfindungsgemäße Formgebung der Aussparung im Küken wird die Proportionalität der Drosselung erreicht, weil diese durch den jeweiligen freien Querschnitt der Aussparung gegeben ist, der seinerseits von der Endwand, den parallelen Begrenzungswänden der Aussparung und der der Endwand gegenüberliegenden Gehäusewand bzw. des dieser zugeordneten Abschnittes der Ringdichtung gegeben ist. Jeder Zwischenstellung des Kükens entspricht hierbei ein um eine Konstante vergrößerter oder verkleinerter Drosselquerschnitt, d.h. es besteht eine proportionale Verminderung bzw. Vergrößerung des freien Querschnittes zur Verschwenkstellung des Kükens, weil in jeweils gleichem Maße die immer größer bzw. immer kleiner werdende Kugelabschnittsfläche in den freien Querschnitt wandert und im selben Maße immer mehr freie Querschnittsfläche der Aussparung hinter die Ringdichtung gelangt oder hervortritt, wenn das Küken verschwenkt wird. Diese der Verschwenkstellung des Kugelkükens absolut proportionale freie Querschnittsfläche ist zugleich die geringste freie Fläche des verbliebenen Durchflusses und nur an der Endwand wird der Strom umgelenkt, was für die Dichtungen ungefährlich ist, auch wenn sich der Restquerschnitt so weit verkleinert hat, daß der Strom an der Kante der Endwand abreißt; das tritt aber erst verhältnismäßig spät, d.h. bei geringen freien Querschnittsflächen der Aussparung und bei hoher Drosselung ein. Die einseitig offene Aussparung wird von ebenen Wänden begrenzt, wobei die Ebene der Endwand parallel zur Schwenkachse des Kükens orientiert ist. Die Aussparung hat dann die Form eines einseitig offenen Schlitzes, der sich durch Räumen oder eine andere rationelle Bearbeitung des Kugelkükens herstellen läßt. Um die bei Durchfluß und Drosselung zwangsläufig freigelegten, d.h. nicht mit der Kugelfläche unterstützten Segmente der Ringdichtungen möglichst klein zu halten, ist es ferner zweckmäßig, den Abstand der parallelen Wände der Aussparung geringer als den freien Durchgangsquerschnitt der anschließenden Rohre bzw. Dichtungen des Rohrgehäuses zu wählen. Somit sind die Dichtungsflächen der Ringdichtungen stets in Kontakt mit der Oberfläche des Kükens und daher vor Beschädigung geschützt. Diese Ausbildung der Aussparung hat darüber hinaus den Vorteil, daß beim Herstellen des Kugelkükens weniger Material aus der vollen Kugel herausgearbeitet werden muß als bei den Kugelküken gemäß den oben genannten Druckschriften, was ebenfalls zur Vereinfachung des Herstellungsverfahrens dient.

Vorzugsweise und gemäß dem Merkmal des Anspruchs 2 erreicht man eine weitere Vereinfachung dadurch, daß die Drosselquerschnitte durch Selbsthemmung des Kükens zwischen Durchgang und Blindschluß festlegbar sind.

Die Einzelheiten und weiteren Merkmale der Erfindung ergeben sich aus der nachfolgenden Beschreibung einer Ausführungsform anhand der Figuren in der Zeichnung; es zeigen

Fig. 1 in Seitenansicht und teilweise im Schnitt einen Kugelhahn gemäß der Erfindung und

Fig. 2 eine Draufsicht auf den Gegenstand der Fig. 1.

Der in den Figuren dargestellte Kugelhahn hat ein allgemein mit 1 bezeichnetes Gehäuse. Hierbei bilden Gehäuserohre 2, 3 mit Innengewinden 4 und einem Anschlußnippel 5 mit einem Gehäusemittelstück 6 eine Baueinheit. Im Gehäusemittelstück und an den inneren Enden der Gehäuserohre 2 sind ringförmige Sitze 7, 8 für je eine Ringdichtung 9, 10 ausgebildet. Diese Ringdichtungen 9, 10 haben eine Fase 11, mit der sich die Ringdichtungen jeweils auf der Kugelfläche 12 des allgemein mit 14 bezeichneten Kükens abstützen. Das Küken hat an seinem oberen Pol einen durch dessen Mitte verlaufenden Schlitz 15, in den ein rechteckiger Endabschnitt 16 einer allgemein mit 17 bezeichneten Welle paßt, die in einer Verschlußmutter gelagert ist, welche in die Oberseite 18 des Gehäuses eingedreht ist. Ein Vierkant 19 der Welle steht aus dem Oberteil 18 des Gehäuses vor. Auf ihn läßt sich eine sternförmig bei 20 ausgenommene Nabe 21 eines Griffes 22 mit einer Endkugel 23 schieben und mit Hilfe einer die Zinken 24, 25 der Nabe durchsetzenden Schraube 26 verspannen.

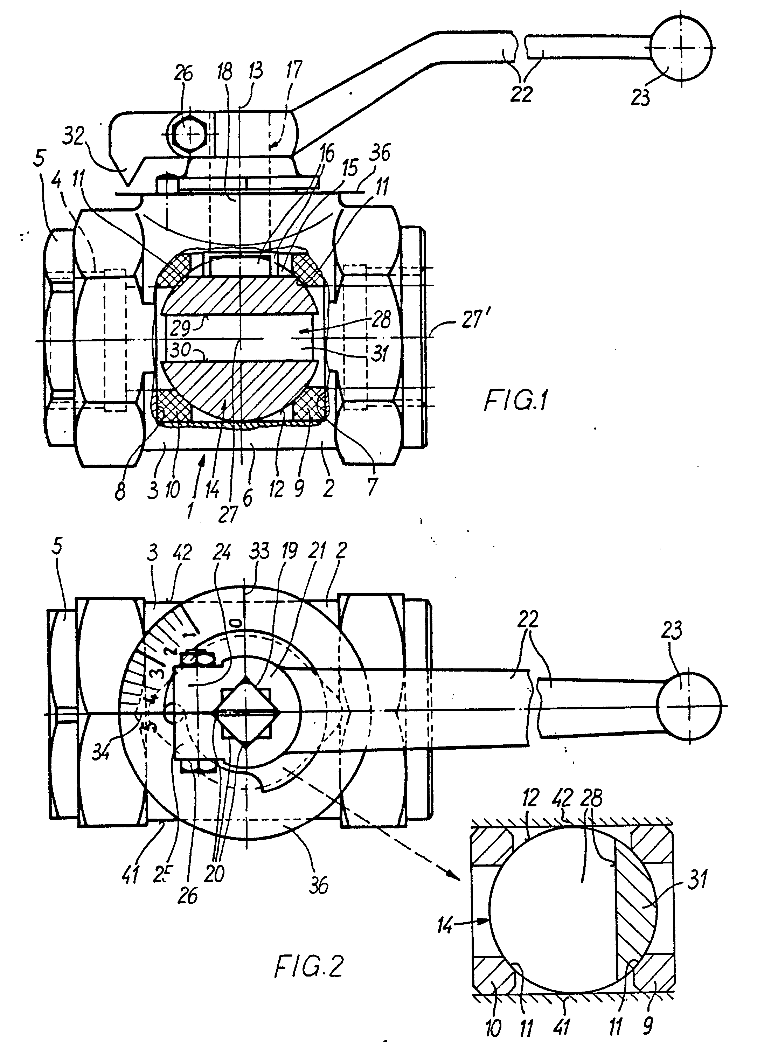

Die Achse der Schwenkwelle ist in Fig. 1 mit 13 bezeichnet und durchsetzt die Kugelmitte 27. Gemäß dem Ausführungsbeispiel verläuft senkrecht zur Achse 13 in einer durch den Kugelmittelpunkt 27 verlaufenden Ebene 27' eine einseitig offene Aussparung 28, welche von zwei parallelen Wänden 29, 30 und einer diese verbindenden Endwand 31 begrenzt ist. Diese Endwand dient in der in Figur 2 dargestellten Stellung des Kükens, in der die Aussparung 28 blindgeschlossen ist, den Blindschluß her, indem sie gegenüberliegende Abschitte der Ringdichtung 9 überbrückt. In dieser Stellung steht die an den Gabelzinken unten angebrachte Schneide 32 auf der in Fig. 2 bei 33 wiedergegebenen Nullmarke.

In der Durchgangsstellung des Kugelkükens, die in den Figuren 1 und 2 dargestellt ist, steht dagegen die Schneide 32 auf der bei 34 wiedergegebenen Marke, die auf einer Ringscheibe 36 mit "5" gekennzeichnet ist. Die Zwischenstellungen sind auf der Ringscheibe 36 mit "1" - "4" wiedergegeben und weiter unterteilt. In diesen Stellungen des Kükens begrenzt die Endwand 31 Drosselquerschnitte, die sich zwischen "1" und "5" einstellen lassen und sich proportional zur jeweiligen Verschwenkstellung des Kükens verhalten, wie sie sich aus der Skaleneinteilig auf der Scheibe 36 ablesen läßt.

In der Durchgangsstellung liegt die senkrechte Wand 28 hinter der zugeordneten Ringdichtung 9, 10. In der Blindschlußstellung dient die senkrechte Aussparungswand 31 im Zusammenwirken mit den zugeordneten Gehäusewänden 41, 42 zur Sperrung des Durchganges.

**Patentansprüche**

1. Kugelhahn, welcher in einem Rohrgehäuse (1) zwischen in den Gehäuserohren (2, 3) sitzenden Dichtungen (9, 10) mit einer durchgehenden einseitig offenen Aussparung (28) versehenes Küken (14) aufweist, die durch Verschwenkung des Kükens (14) um eine seiner Kugelachsen (13) einen Durchgang durch das Gehäuse (1) herstellt oder mit Hilfe der Gehäusewände blindgeschlossen wird, wobei die Aussparung (28) von wenigstens zwei parallelen Wänden (29, 30) und einer diese verbindenden Endwand (31) begrenzt ist, die zum Blindschließen dient und in Stellungen des Kükens (14) zwischen Durchgang und Blindschluß Drosselquerschnitte ("1" bis "5") begrenzt, dadurch gekennzeichnet, daß die Aussparung (28) von ebenen Wänden (29, 30, 31) begrenzt ist, wobei die Ebene der Endwand (31) parallel zur Schwenkachse (13) des Kükens (14) orientiert ist und daß der Abstand der parallelen Wände (29, 30) der Aussparung (28) geringer als der freie Durchgangsquerschnitt der anschließenden Rohre (2, 3) bzw. der Dichtungen (9, 10) des Rohrgehäuses (1) ist.

2. Kugelhahn nach Anspruch 1, dadurch gekennzeichnet, daß die Drosselquerschnitte ("1"bis"5") durch Selbsthemmung des Kükens (14) zwischen Durchgang und Blindschluß festlegbar sind.

**Claims**

1. A ball valve having a ball (14) provided with a through recess (28), which is open on one side, in a pipe housing (1) between seals (9, 10) in the housing pipes (2, 3), which valve by swivelling of the ball (14) around one of its ball axes (13) provides a free passage through the housing (1) or in cooperation with the housing walls provides a blind closure, wherein the recess (28) is delimited by at least two parallel walls (29, 30) and by one connecting end wall (31) which serves for the blind closure and which provides limited throttling cross-sections ("1" to "5") in positions of the ball (14) intermediate free passage and blind closure, characterised in that the recess (28) is delimited by plane walls (29, 30, 31), the plane of the end wall (31) being located parallel to the swivel axis of the ball (14), and that the spacing of the parallel walls (29, 30) of the recess (28) is less than the free passage cross-section of the connected pipes (2, 3) or the seals (9, 10) of the pipe housing (1).

2. A ball valve according to claim 1, characterised in that the throttling cross-sections ("1" to "5") are definable through self-checking of the ball (14) intermediate free passage and blind closure.

**Revendications**

1. Robinet à boisseau sphérique, comportant un boisseau (14) disposé dans un corps tubulaire (1) entre des garnitures d'étanchéité (9, 10) montées dans les parties tubulaires (2, 3) du corps, ce boisseau (14) étant pourvu d'un évidement (28) ouvert d'un côté et qui traverse le boisseau; cet évidement permettant d'établir un passage libre à travers le corps (1) sous l'effet d'un pivotement du boisseau (14) autour de l'axe (13) de sa surface sphérique, ou de mettre le boisseau en position d'obturation complète en coopération avec les parois du corps; cet évidement (28) étant limité par au moins deux parois parallèles (29, 30) et par une paroi terminale (31), qui relie les deux parois parallèles et qui sert à assurer l'obturation et à limiter les sections d'étranglement ("1" à "5"), suivant la position du boisseau (14) entre le libre passage et l'obturation complète,

caractérisé en ce que l'évidement (28) est limité par des parois planes (29, 30, 31), le plan de la paroi terminale (31) étant orienté parallèlement à l'axe de pivotement (13) du boisseau (14), et en ce que l'écartement des parois parallèles (29, 30) de l'évidement (28) est plus faible que la section de passage libre des parties tubulaires adjacentes (2, 3) et des garnitures d'étanchéité (9, 10) du corps tubulaire (1).

2. Robinet conforme à la revendication 1, caractérisé en ce que les sections d'étranglement ("1" à "5") peuvent être réglées de manière stable, entre le libre passage et l'obturation complète, grâce à un effet d'auto-blocage du boisseau (14).

FIG.1

FIG.2